# EUROPEAN PATENT APPLICATION

(11) **EP 3 686 170 A1**
(43) Date of publication of application: **29.07.2020**
(21) Application number: 18859794.2
(22) Date of filing: 03.09.2018
(51) Int. Cl.: C03C 27/12, B60J 1/00, B60J 1/02

(54) **LAMINATED GLASS FOR VEHICLE FRONT WINDOWS**

(30) Priority: 21.09.2017 JP 2017180872; 25.10.2017 JP 2017205905
(71) Applicant: Central Glass Company, Limited, Ube-shi, Yamaguchi 755-0001 (JP)
(72) Inventor: NIITSU, Takao, Matsusaka-shi Mie 515-0001 (JP); MARUYAMA, Kazuhide, Matsusaka-shi Mie 515-0001 (JP)
(74) Representative: Mewburn Ellis LLP
(86) International application number: PCT/JP2018/032590
(87) International publication number: WO 2019/058944

(57) **Abstract**

Provided is laminated glass using an intermediate film having a wedge angle profile that is capable of reducing a double image on a HUD resulting from the influence of the curvature in the longitudinal direction of the window as well as the curvature in the horizontal direction of the window. Laminated glass for a vehicle front window includes a curved first glass plate having a trapezoidal or rectangular shape, a second glass plate having the same shape as the first glass plate, and an intermediate film disposed between the first glass plate and the second glass plate. The laminated glass is provided with an imaging section of an image projected from an imaging device incorporated in a dash board on a driver's seat side in an indoor side surface of the laminated glass, in a state in which the laminated glass is incorporated in a vehicle body. The intermediate film is provided with a wedge angle profile with a thickness continuously changing in all 360° directions in observation from the inside of the vehicle when an upper longitudinal direction from the imaging section is set to 0°, and has a thickness of the intermediate film based on the wedge angle profile continuously decreasing from an upper side to a lower side and continuously decreasing in the horizontal direction from the driver's seat side to the passenger seat side.

## Description

### TECHNICAL FIELD

The present invention relates to curved laminated glass for a vehicle front window, applied as a display member of a head up display (HUD).

### BACKGROUND ART

For an intermediate film of curved trapezoidal or rectangular laminated glass for a vehicle front window, applied as a display member of a HUD, an intermediate film having substantially the same shape as the laminated glass, and having a thickness continuously (linearly) changed from the one side toward an opposite side, a so-called intermediate film having a wedge angle profile is used. In addition to the intermediate film having a wedge angle profile, use of a glass plate having a wedge angle profile is proposed (for example, Patent Literatures 7 to 9). The wedge angle profile is integrally molded in the laminated glass such that the thickness decreases in the longitudinal direction from the upper side to the lower side of the laminated glass, and the thickness in the horizontal direction of the laminated glass becomes constant, when the laminated glass is incorporated in a vehicle.

An imaging device that projects an image on the display member is provided in a dash board in front of a driver's seat, and therefore an imaging section of an image projected from the imaging device is reflected on an indoor-side glass surface of the laminated glass. At this time, on an outdoor-side glass surface of the laminated glass, a reflected image of the imaging section is reflected above the imaging section (for example, refer to Patent Literatures 1 and 2 as to explanation of an optical system). The surface of the laminated glass is inclined toward a driver, and therefore the driver is consequently likely to visually recognize a double image in the longitudinal direction from a lower side to an upper side. In a vehicle, a projected image is projected on the indoor-side glass surface from the lower side of the laminated glass, and therefore reduction of the double image has been attained by the laminated glass (for example, Patent Literatures 3 to 5).

However, recently, design of a vehicle is diversified and varied, and as a front window for a vehicle, the number of windows having large curvature also in the horizontal direction has been increasing. Therefore, as suggested in Patent Literature 6, the curvature in the horizontal direction influences appearance of a double image. Patent Literature 6 proposes the need for providing a wedge angle profile also in the horizontal direction of an intermediate film of laminated glass, and laminated glass provided with an intermediate film having a continuous nonlinear wedge angle profile in the vertical direction and the horizontal direction in a section of an intermediate film aims for reduction of the influence of the horizontal direction on the appearance of a double image.

### CITATION LIST

### - Patent Literature

Patent Literature 1: JP H2-279437 A
Patent Literature 2: JP H3-209210 A
Patent Literature 3: JP H07-508690 T
Patent Literature 4: JP H11-130481 A
Patent Literature 5: JP 2011-505330 T
Patent Literature 6: JP 2017-502125 T
Patent Literature 7: JP H7-195959 A
Patent Literature 8: WO/2016/121559
Patent Literature 9: JP 2017-105665 A

### SUMMARY OF INVENTION

### - Technical Problem

In the reduction of a double image in curved laminated glass for a vehicle front window, applied as the display member of the HUD, it is necessary to consider the influence of the curvature in the horizontal direction of glass, as described above. As proposed in Patent Literature 6, it appears that the reduction of the influence of the horizontal direction on the appearance of the double image is attained by practical use of the intermediate film.

However, in industrial production of laminated glass, the intermediate film is provided in a manner of roll. Therefore, in the wedge angle profile, the thickness continuously decreases from one side of the roll of an intermediate film original sheet to another side thereof (from an upper surface of a cylindrical object to an bottom surface thereof), and the thickness in the drawing-out direction of the roll has no choice but to become constant (conventionally, the constant thickness direction is disposed to be located in the horizontal direction, in laminated glass). In order to manufacture an intermediate film proposed in Patent Literature 6, the intermediate film original sheet is cut in a stripe shape from a roll and the cut film needs to be machined by press molding or the like so as to have a further wedge angle profile. Such machining is not only a factor of increase of cost of the laminated glass, but increases a risk of reduction of machining accuracy of an intermediate film surface resulting from complication of machining.

The present invention relates to a HUD obtained by using a front window for a vehicle as a display member, and an object of the present invention is to provide laminated glass using an intermediate film having a wedge angle profile that is capable of reducing a double image on the HUD resulting from the influence of the curvature in the longitudinal direction of the window as well as the curvature in the horizontal direction of the window.

### - Solution to Problem

Laminated glass of the present invention is laminated glass for a vehicle front window, including: a curved first glass plate having a trapezoidal or rectangular shape; a second glass plate having the same shape as the first glass plate; and an intermediate film disposed between the first glass plate and the second glass plate,
the laminated glass being provided with an imaging section of an image projected from an imaging device incorporated in a dash board on a driver's seat side in an indoor side surface of the laminated glass, in a state in which the laminated glass is incorporated in a vehicle body,
the laminated glass being provided with a wedge angle profile with a thickness continuously changing in all 360° directions in observation from the inside of the vehicle when an upper longitudinal direction from the imaging section is set to 0°, and having a thickness of the laminated glass based on the wedge angle profile continuously decreasing from an upper side to a lower side and continuously decreasing in the horizontal direction from a driver's seat side to a passenger seat side.

The laminated glass is provided with the wedge angle profile in the longitudinal direction and the horizontal direction of the laminated glass, and has a structure in which the thickness based on the wedge angle profile continuously decreases from the upper side to the lower side and continuously decreases in the direction from the driver's seat side to the passenger seat side. Therefore, it is possible to attain reduction of a double image in these directions.

Preferred laminated glass (first laminated glass) is laminated glass for a vehicle front window, including: a curved first glass plate having a trapezoidal or rectangular shape; a second glass plate having the same shape as the first glass plate; and an intermediate film disposed between the first glass plate and the second glass plate,
the laminated glass being provided with an imaging section of an image projected from an imaging device incorporated in a dash board on a driver's seat side in an indoor side surface of the laminated glass, in a state in which the laminated glass is incorporated in a vehicle body,
the intermediate film being provided with a wedge angle profile with a thickness continuously changing in all 360° directions in observation from the inside of the vehicle when the upper longitudinal direction from the imaging section is set to 0°, and having a thickness of the intermediate film based on the wedge angle profile continuously decreasing from an upper side to a lower side and continuously decreasing in the horizontal direction from the driver's seat side to the passenger seat side.

In the laminated glass, the intermediate film is provided with the wedge angle profile in the longitudinal direction and the horizontal direction of the laminated glass, and has a structure in which the thickness of the intermediate film based on the wedge angle profile continuously decreases from the upper side to the lower side and continuously decreases in the direction from the driver's seat side to the passenger seat side. Therefore, it is possible to attain reduction of a double image in these directions.

Another preferred laminated glass (second laminated glass) is laminated glass for a vehicle front window, including: a curved first glass plate having a trapezoidal or rectangular shape; a second glass plate having the same shape as the first glass plate; and an intermediate film disposed between the first glass plate and the second glass plate,
the laminated glass being provided with an imaging section of an image projected from an imaging device incorporated in a dash board on a driver's seat side in an indoor side surface of the laminated glass, in a state in which the laminated glass is incorporated in a vehicle body,
the laminated glass being provided with a wedge angle profile with a thickness continuously changing in all 360° directions in observation from the inside of the vehicle when an upper longitudinal direction from the imaging section is set to 0°, and having a thickness of the laminated glass based on the wedge angle profile continuously decreasing from an upper side to a lower side and continuously decreasing in the horizontal direction from a driver's seat side to a passenger seat side.

At least one glass plate selected from the group consisting of the first glass plate and the second glass plate is provided with a wedge angle profile with a thickness continuously decreasing in the direction from a lateral side on a driver's seat side to a lateral side on a passenger seat side, and

the intermediate film has a wedge angle profile with a thickness continuously decreasing from an upper side to a lower side.

The laminated glass including the intermediate film and the glass plates is provided with the wedge angle profile in the longitudinal direction and the horizontal direction of the laminated glass, and has a structure in which the thickness of the laminated glass based on the wedge angle profile continuously decreases from the upper side to the lower side and continuously decreases in the direction from the driver's seat side to the passenger seat side. Therefore, it is possible to attain reduction of a double image in these directions.

Another preferred laminated glass (third laminated glass) is laminated glass for a vehicle front window, including: a curved first glass plate having a trapezoidal or rectangular shape; a second glass plate having the same shape as the first glass plate; and an intermediate film disposed between the first glass plate and the second glass plate,
the laminated glass being provided with an imaging section of an image projected from an imaging device incorporated in a dash board on a driver's seat side in an indoor side surface of the laminated glass, in a state in which the laminated glass is incorporated in a vehicle body,
the laminated glass being provided with a wedge angle profile with a thickness continuously changing in all 360° directions in observation from the inside of the vehicle when an upper longitudinal direction from the imaging section is set to 0°, and having a thickness of the laminated glass based on the wedge angle profile continuously decreasing from an upper side to a lower side and continuously decreasing in the horizontal direction from a driver's seat side to a passenger seat side.

At least one glass plate selected from the group consisting of the first glass plate and the second glass plate is provided with a wedge angle profile with a thickness continuously decreasing from an upper side to a lower side, and
the intermediate film has a wedge angle profile with a thickness continuously decreasing in the direction from a lateral side on a driver's seat side to a lateral side on a passenger seat side.

The laminated glass including the intermediate film and the glass plates is provided with the wedge angle profile in the longitudinal direction and the horizontal direction of the laminated glass, and has a structure in which the thickness of the laminated glass based on the wedge angle profile continuously decreases from the upper side to the lower side and continuously decreases in the direction from the driver's seat side to the passenger seat side. Therefore, it is possible to attain reduction of a double image in these directions.

### - Advantageous Effects of Invention

When the laminated glass for a vehicle front window of the present invention is used as a display member of a HUD, reduction of the appearance of a double image can be attained in the horizontal direction as well as in the longitudinal direction. Also, the laminated glass is provided with a wedge angle profile in all directions of the surface. Therefore, it is possible to attain reduction of a double image regardless of the shape of the front window.

### BRIEF DESCRIPTION OF DRAWINGS

FIG. 1 is a figure illustrating a principal part when laminated glass of the present invention, incorporated as a front window in a vehicle body, is observed from the front side of the vehicle;
FIG. 2 is a figure related to laminated glass of the present invention, and illustrating relation among the laminated glass used as a display member of a HUD, an imaging device that projects an image on the display member, an imaging section of the image projected from the imaging device, and a virtual image visually recognized by an observer, as viewed from a-a' cross-section of FIG. 1;
FIG. 3 schematically illustrates a state in which a first intermediate film original sheet is drawn out from a roll of the intermediate film original sheet;
FIG. 4 schematically illustrates a second intermediate film original sheet;
FIG. 5 is a figure illustrating an intermediate film original sheet laminated body formed by superposing the first intermediate film original sheet and the second intermediate film original sheet such that the constant thickness profile direction of the first intermediate film original sheet is not the same as the constant thickness profile direction of the second intermediate film original sheet; and
FIG. 6 is a figure schematically illustrating a principal part of a state of molding of a glass basis material at the time of obtaining a wedge glass plate, by a float glass process.

### DESCRIPTION OF EMBODIMENTS

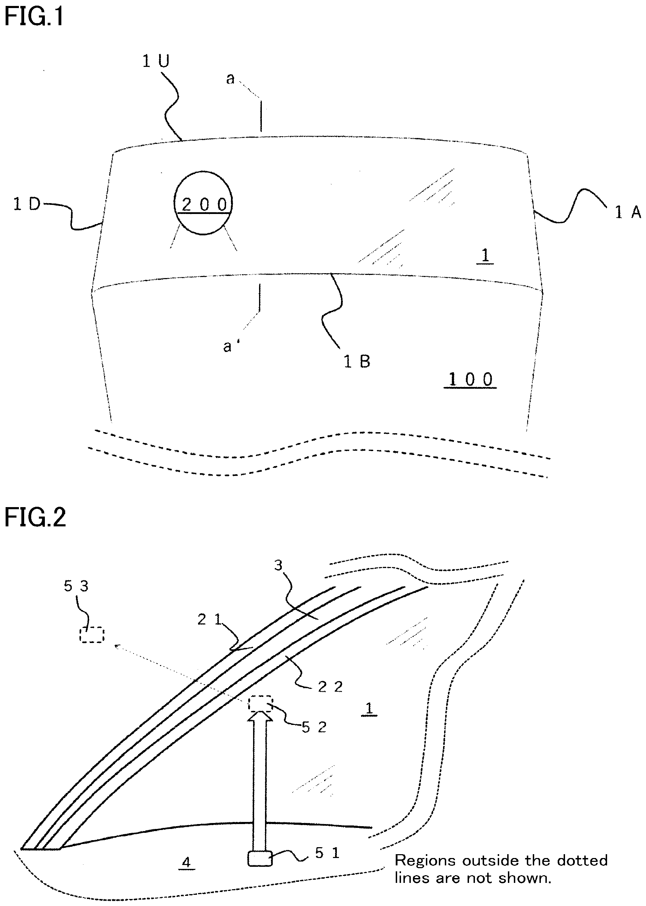

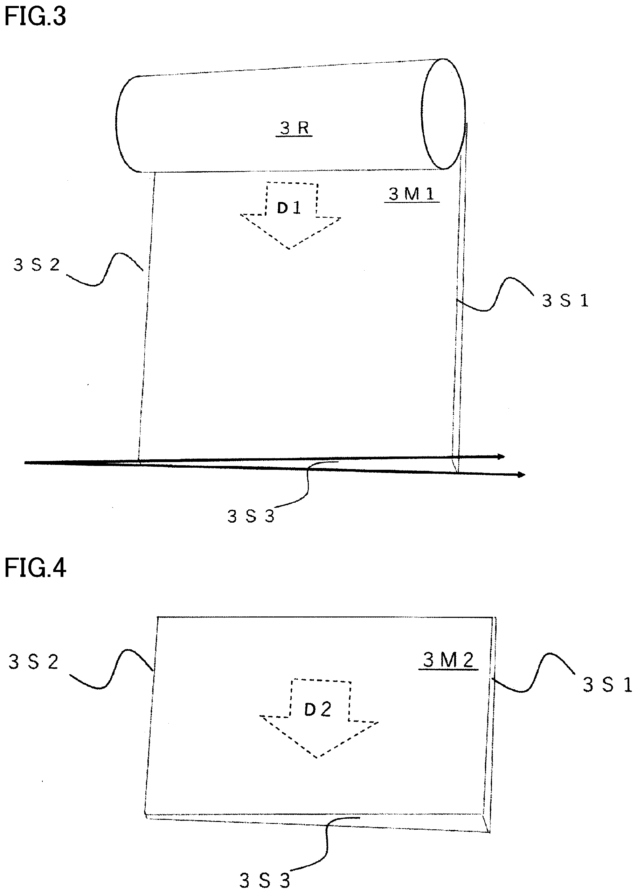

Laminated glass of the present invention will be described with reference to the drawings. FIG. 1 is a figure illustrating a principal part when laminated glass 1 of the present invention, incorporated as a front window in a vehicle, is observed from the front side of a vehicle body 100. FIG. 2 is a figure related to laminated glass and illustrating relation among the laminated glass used as a display member of a HUD, an imaging device 51 that projects an image on the display member, an imaging section 52 of the image projected from the imaging device 51, and a virtual image 53 visually recognized by an observer (driver) 200, as viewed from a-a' cross-section of FIG. 1. FIG. 3 schematically illustrates a state in which a first intermediate film original sheet 3M1 is drawn out from a roll 3R of the intermediate film original sheet. When a lateral side 3S3 that is an end face in the drawing-out direction of the first intermediate film original sheet 3M1 (rectangle in plan view) is viewed, both principal surfaces of the original sheet 3M1 are nonparallel, and therefore an angle occurs. A profile of the thickness in the drawing-out direction of the first intermediate film original sheet 3M1 from the roll 3R is constant.

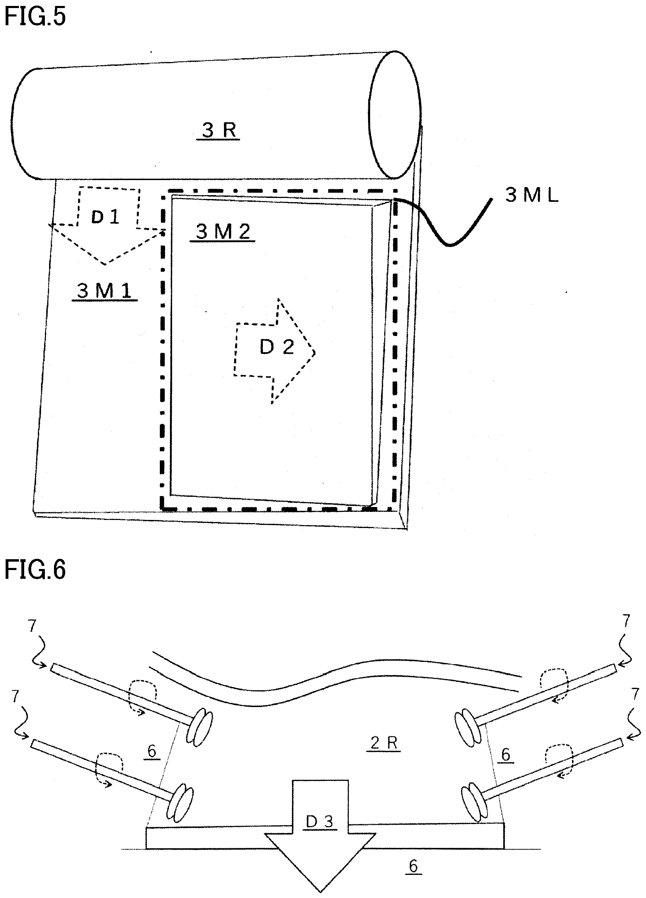

FIG. 4 schematically illustrates a second intermediate film original sheet 3M2. The second intermediate film original sheet 3M2 may be cut out from the first intermediate film original sheet 3M1 drawn out from the roll 3R. FIG. 5 is a figure illustrating an intermediate film original sheet laminated body 3ML (the region illustrated by a dashed line in FIG. 5) formed by superposing the first intermediate film original sheet and the second intermediate film original sheet such that the constant thickness profile direction of the first intermediate film original sheet is not the same as the constant thickness profile direction of the second intermediate film original sheet.

The laminated glass 1 is the laminated glass 1 for a front window of a vehicle including a curved first glass plate 21 having a trapezoidal or rectangular shape, a second glass plate 22 having the same shape as the first glass plate, and an intermediate film 3 disposed between the first glass plate and the second glass plate. When the laminated glass 1 is incorporated in the vehicle body 100, the first glass plate 21 is disposed on an outdoor side, and the second glass plate 22 is disposed on an indoor side.

In the laminated glass 1 incorporated in the vehicle body 100, the imaging section 52 of the image projected from the imaging device 51 incorporated in the dash board 4 on the driver's seat side is included in an indoor side surface of the second glass plate 22. The intermediate film 3 is provided with a wedge angle profile with a thickness continuously changing in all 360° directions in observation from the inside of the vehicle when the upper longitudinal direction from the imaging section is set to 0°, and has a thickness of the intermediate film based on the wedge angle profile continuously decreasing from an upper side 1U to a lower side 1B and continuously decreasing in the horizontal direction from a lateral side 1D on a driver's seat side to a lateral side 1A on a passenger seat side. FIG. 1 illustrates a case in which the driver's seat of the vehicle body 100 is the right side seat, and in a case in which the driver's seat of the vehicle body 100 is the left side seat, each configuration illustrated in FIG. 1 is left and right opposite arrangement.

The glass plates 21 and 22 each may be a glass plate made of soda lime silicate glass regulated by ISO16293-1, manufactured by a float glass process and widely used as a glass plate for a vehicle. Colorless or colored glass can be used. The glass plates 21 and 22 each have a curved trapezoidal or rectangular shape, and each include the upper side 1U, a lateral side 1D on the driver's seat side, the lateral side 1A on the passenger seat side, and the lower side 1B. Each side is a cut section formed by cutting out each of the glass plates 21 and 22 from a glass plate larger than each glass plate, and the cut section may be grinded or polished. The curved glass plates 21 and 22 are each obtained by molding by heating a flat glass plate that is cut out in a predetermined size up to the vicinity of a softening point. The molding includes self-weight bending or press molding. The thickness of each glass plate may be appropriately selected in a range of, for example, 0.4 mm to 4 mm.

Other examples of glass to be used in the glass plates 21 and 22 include respective plastic glasses made of polyethylene terephthalate resin, polycarbonate resin, polycarbonate resin, polyvinyl chloride resin, polyethylene resin.

The intermediate film 3 is made of a thermoplastic polymer material. The polymer material may be cycloolefin polymer (COP), polyurethane (PUR), ethylene/vinyl acetate (EVA), polyvinyl butyral (PVB), or the like, and is particularly preferably PVB. The refractive index in a visible light region of the intermediate film 3 is preferably equivalent to those of the glass plates 21 and 22.

Now, the first laminated glass 1 will be described in detail. Preferably, the intermediate film 3 of the first laminated glass 1 is cut out from the intermediate film original sheet laminated body 3ML which has a wedge angle profile in all directions. As illustrated in FIG. 5, the intermediate film original sheet laminated body 3ML can be obtained by laminating the first intermediate film original sheet 3M1 and the second intermediate film original sheet 3M2.

In the first intermediate film original sheet 3M1, as illustrated in FIG. 3, the both principal surfaces of the intermediate film original sheet are nonparallel, and the thickness profile in the drawing-out direction of the roll 3R is constant. The constant thickness profile direction (direction indicated by a broken line arrow in FIG. 3) is defined as a direction D1. The both principal surfaces of the intermediate film original sheet are nonparallel, and therefore the thickness continuously decreases from a lateral side 3S1 toward another lateral side 3S2 of the first intermediate film original sheet 3M1. The angle made by the two solid arrows at a lateral side 3S3 shown on the lower part in FIG. 3 is a maximum wedge angle of the original sheet.

The second intermediate film original sheet 3M2 may be cut out from the first intermediate film original sheet 3M1 drawn out from the roll 3R. The thickness profile of the second intermediate film original sheet 3M2 illustrated in FIG. 4 follows the thickness profile of the first intermediate film original sheet 3M1. In the second intermediate film original sheet 3M2, the constant thickness profile direction (direction represented by a broken line arrow in FIG. 4) is represented by a direction D2. While the second intermediate film original sheet 3M2 is exemplified by a sheet cut out from the first intermediate film original sheet 3M1, it may be cut out from a roll similar to the roll 3R.

As illustrated in FIG. 5, the intermediate film original sheet laminated body 3ML can be obtained by laminating the first intermediate film original sheet 3M1 and the second intermediate film original sheet 3M2 such that the direction D1 is not the same as the direction D2. The direction D1 is not the same as the direction D2, and the direction D1 may make an angle (acute angle) of 5° to 90°, preferably 15° to 75° with the direction D2. The direction D2 may be set to be the same as the longitudinal direction from the lower side 1B to the upper side 1U, and the direction D1 may be set to be the same as the horizontal direction from the lateral side 1D to the lateral side 1A. Instead of the structure in which the direction D2 is "set to be the same as the longitudinal direction" and the direction D1 is "set to be the same as the horizontal direction", the direction D1 may be set at any one of angles within the range of 60° to 87° when the upper longitudinal direction from the imaging section 52 is set to 0°. In this case, the direction D2 is set such that it makes an angle of 5° to 90°, preferably 15° to 75° with the direction D1.

The laminated glass 1 can be obtained by using the intermediate film original sheet laminated body 3ML as a material of the intermediate film 3. The intermediate film original sheets 3M1 and 3M2 may have a zone in which the profile of the thickness in the direction 31 from the lateral side 3S1 or 3S2 is constant. In a case in which the intermediate film 3 includes the zone, the intermediate film 3 has to be adjusted such that the zone does not include the imaging section 52 in the laminated glass 1.

In the HUD that uses the laminated glass 1, a projected image is projected upward as illustrated by a solid line of FIG. 2, from the imaging device 51 incorporated in the dash board 4. Then, the imaging section 52 is formed on the indoor side surface of the laminated glass 1 (glass plate 22), and the virtual image 53 of the imaging section 52 is observed by an observer 200 as a driver. In suppression of a double image of a virtual image visually recognized by the observer 200, suppression of the double image in the imaging section 52 is important.

In a vehicle front window, the laminated glass 1 is provided with a wedge angle profile not only in the longitudinal direction but also in the horizontal direction and in all directions. Therefore, it is easy to attain reduction of a double image at the imaging section 52 regardless of the shape of the front window.

The intermediate film 3 in the laminated glass 1 preferably has a wedge angle in the 180° direction of 0.1 mrad to 1.4 mrad in observation from the inside of the vehicle when the upper longitudinal direction from the imaging section 52 is set to 0°. In a case in which the angle is less than 0.1 mrad, an effect of double image suppression in the longitudinal direction of the laminated glass 1 is likely to be reduced. On the other hand, in a case in which the angle exceeds 1.4 mrad, difference in the thickness of the laminated glass between the upper side 1U and the lower side 1B occurs, and therefore efficiency when the laminated glass 1 is assembled to the vehicle body is likely to be lowered. Considering these, the wedge angle may be 0.3 mrad to 1.2 mrad.

The laminated glass 1 preferably has a wedge angle in the horizontal direction from the driver's seat side to the passenger seat side of 0.1 mrad to 0.6 mrad. In a case in which the angle is less than 0.1 mrad, an effect of double image suppression in the longitudinal direction of the laminated glass 1 is likely to be reduced. On the other hand, in a case in which the angle is more than 0.6 mrad, an effect of double image suppression is too large, which may lead to difficulty in displaying a reflected image on an indoor side and a reflected image on an outdoor side while they are overlapped. Considering these, the wedge angle may be 0.2 mrad to 0.5 mrad. In the laminated glass 1, the thickness of the intermediate film 3 in an area of a maximum thickness may be 0.8 mm to 2.2 mm.

A method for manufacturing the first laminated glass 1 includes
a step A of preparing a curved first glass plate 21 having a trapezoidal or rectangular shape, and a second glass plate 22 having the same shape as the first glass plate;
a step B1 of preparing a first intermediate film original sheet 3M1 that is a long intermediate film original sheet, that has a wedge angle profile with a thickness continuously decreasing in a direction from one lateral side 3S1 to an opposite lateral side 3S2, that has both principal surfaces nonparallel to each other, and that has a constant thickness profile in one direction (direction D1);
a step B2 of preparing a second intermediate film original sheet 3M2 that is a long intermediate film original sheet, that has a wedge angle profile with a thickness continuously decreasing in a direction from one lateral side 3S1 to an opposite lateral side 3S2, that has both principal surfaces nonparallel to each other, and that has a constant thickness profile in one direction (direction D2);
a step B3 of forming an intermediate film original sheet laminated body 3ML by laminating the first intermediate film original sheet 3M1 and the second intermediate film original sheet 3M2 such that the constant thickness profile direction of the first intermediate film original sheet 3M1 is not the same as the constant thickness profile direction of the second intermediate film original sheet 3M2 (directions D1 and D2);
a step C of preparing an intermediate film 3 having a trapezoidal or rectangular shape that is cut out from the intermediate film original sheet laminated body 3ML; and
a step D of interposing the intermediate film 3 between the first glass plate 21 and the second glass plate 22.

Another aspect of a method for manufacturing the first laminated glass 1 may include
a step A of preparing a curved first glass plate 21 having a trapezoidal or rectangular shape, and a second glass plate 22 having the same shape as the first glass plate 21;
a step B1 of preparing a first intermediate film original sheet that is a long intermediate film original sheet 3M1, that has a wedge angle profile with a thickness continuously decreasing in a direction from one lateral side 3S1 to an opposite lateral side 3S2, that has both principal surfaces nonparallel to each other, and that has a constant thickness profile in one direction (direction D1) ;
a step B2 of preparing a second intermediate film original sheet 3M2 that is a long intermediate film original sheet, that has a wedge angle profile with a thickness continuously decreasing in a direction from one lateral side 3S1 to an opposite lateral side 3S2, that has both principal surfaces nonparallel to each other, and that has a constant thickness profile in one direction (direction D2);
a step B3 of forming an intermediate film original sheet laminated body 3ML by laminating the first intermediate film original sheet 3M1 and the second intermediate film original sheet 3M2 such that the constant thickness profile direction of the first intermediate film original sheet 3M1 is not the same as the constant thickness profile direction of the second intermediate film original sheet 3M2 (directions D1 and D2);
a step E of interposing the intermediate film original sheet laminated body 3ML between the first glass plate 21 and the second glass plate 22; and
a step F of cutting the intermediate film original sheet laminated body between the first glass plate and the second glass plate to include an intermediate film 3 having a trapezoidal or rectangular shape between the plates.

Furthermore, the first intermediate film original sheet 3M1, the second intermediate film original sheet 3M2, or the intermediate film original sheet laminated body 3ML may be stretched, so that the wedge angle profile of the original sheet may be adjusted.

After the step C, the first glass plate 21, the second glass plate 22, and the intermediate film 3 are thermocompression bonded, specifically, a laminated body of the first glass plate 21, the intermediate film 3, and the second glass plate 22 is pressurized at 1.0 MPa to 1.5 MPa at 100°C to 150°C for 15 to 60 minutes, for example. Thereby, the laminated glass 1 can be manufactured. Before thermocompression bonding, a space between the intermediate film 3 and each of the glass plates 21 and 22 may be deaerated.

Now, the second laminated glass 1 and the third laminated glass 1 will be described in detail. In these laminated glasses, at least one glass plate selected from the group consisting of the first glass plate and the second glass plate is a glass plate (hereinafter, referred to as a "wedge glass plate") having a wedge angle profile with a thickness continuously decreasing in the direction from one lateral side to an opposite lateral side, having both principal surfaces nonparallel to each other, and having a constant thickness profile in one direction.

The wedge glass plate is obtained by devising a condition when the glass plate is manufactured by a float glass process. FIG. 6 is a figure schematically illustrating a principal part of a state of molding of a glass basis material at the time of obtaining a wedge glass plate, by a float glass process. In the float glass process, a molten glass basis material 2R flows on a molten metal bath 6 made of molten tin or the like, a plurality of rolls 7 disposed in both ends of the bath 6 is rotated in the directions of dotted arrows, and the glass basis material 2R is molded. The glass basis material 2R flows in the direction of an arrow D3 directed downward on the bath 6. The peripheral speed when each roll 7 rotates is adjusted, so that the thickness of the glass basis material fluctuates in the width direction of the glass basis material 2R, and the glass plate is obtained. For example, it is possible to obtain a glass plate having a thickness profile continuously decreasing from a right side to a left side as illustrated in FIG. 6, a glass plate having such a concave profile that the thickness of the center in the width direction of the glass basis material 2R is a minimum thickness, a plate having such a protruding profile that the thickness of the center in the width direction of the glass basis material 2R is a maximum thickness, or the like.

The second laminated glass 1 will be described with reference to FIG. 1 and FIG. 2. The second laminated glass 1 is the laminated glass 1 for a vehicle front window, including: a curved first glass plate 21 having a trapezoidal or rectangular shape; a second glass plate 22 having the same shape as the first glass plate; and an intermediate film 3 disposed between the first glass plate and the second glass plate,
the laminated glass 1 being provided with an imaging section 52 of an image projected from an imaging device 51 incorporated in a dash board 4 on a driver's seat side in an indoor side surface of the laminated glass, in a state in which the laminated glass 1 is incorporated in a vehicle body 100,
the laminated glass 1 being provided with a wedge angle profile with a thickness continuously changing in all 360° directions in observation from the inside of the vehicle when an upper longitudinal direction from the imaging section 52 is set to 0°, and having a thickness of the laminated glass based on the wedge angle profile continuously decreasing from an upper side 1U to a lower side 1B and continuously decreasing in the horizontal direction from a lateral side 1D of a driver's seat side to a lateral side 1A of a passenger seat side.

At least one glass plate selected from the group consisting of the first glass plate 21 and the second glass plate 22 is a wedge glass plate provided with a wedge angle profile with a thickness continuously decreasing in the direction from a lateral side on a driver's seat side to a lateral side on a passenger seat side, and
the intermediate film 3 has a wedge angle profile with a thickness continuously decreasing from an upper side to a lower side.

In the wedge glass plate, the constant thickness profile direction is the direction D3, and in the intermediate film 3, the constant thickness profile direction is the direction D1. The wedge glass plate and the intermediate film 3 are laminated such that the direction D1 is different from the direction D3. The direction D1 makes an angle (acute angle) of 5° to 90°, preferably 15° to 75° with the direction D3.

The direction D3 of the wedge glass plate may be set to be the same as the longitudinal direction from the lower side 1B to the upper side 1U, and the direction D1 of the intermediate film 3 may be set to be the same as the horizontal direction from the lateral side 1D to the lateral side 1A. Instead of the structure in which the direction D3 is "set to be the same as the longitudinal direction" and the direction D1 is "set to be the same as the horizontal direction", the direction D1 may be set at any one of angles within the range of 60° to 87° when the upper longitudinal direction from the imaging section 52 is set to 0°. The direction D3 is set such that it makes an angle of 5° to 90°, preferably 15° to 75° with the direction D1.

The direction D3 is a direction in which a glass basis material flows when a glass plate is produced by a float glass process, and on the surface layer of the glass plate, fine streaks are generated along the direction. A driver 200 often turns his or her head to the right or left, and may visually recognize the fine streaks when the direction D3 is set in the horizontal direction from the lateral side 1D to the lateral side 1A. Considering it, in the laminated glass including a wedge glass plate, the direction D3 in the wedge glass plate is preferably set at the upper longitudinal direction of 0° from the imaging section 52. The second laminated glass is favorable because it easily achieves this structure. The wedge glass plate may be used as one or both of the first glass plate 21 and the second glass plate 22.

The second laminated glass 1 preferably has a wedge angle in the 180° direction of 0.1 mrad to 1.4 mrad in observation from the inside of the vehicle when the upper longitudinal direction from the imaging section 52 is set to 0°. In a case in which the angle is less than 0.1 mrad, an effect of double image suppression in the longitudinal direction of the laminated glass 1 is likely to be reduced. On the other hand, in a case in which the angle exceeds 1.4 mrad, difference in the thickness of the laminated glass between the upper side 1U and the lower side 1B occurs, and therefore efficiency when the laminated glass 1 is assembled to the vehicle body is likely to be lowered. Considering these, the wedge angle may be 0.3 mrad to 1.2 mrad. In the laminated glass 1, the thickness of the intermediate film 3 in an area of a maximum thickness may be 0.8 mm to 2.2 mm.

The laminated glass 1 preferably has a wedge angle in the horizontal direction from the driver's seat side to the passenger seat side of 0.1 mrad to 0.6 mrad. In a case in which the angle is less than 0.1 mrad, an effect of double image suppression in the longitudinal direction of the laminated glass 1 is likely to be reduced. On the other hand, in a case in which the angle is more than 0.6 mrad, an effect of double image suppression is too large, which may lead to difficulty in displaying a reflected image on an indoor side and a reflected image on an outdoor side while they are overlapped. Considering these, the wedge angle may be 0.2 mrad to 0.5 mrad.

The third laminated glass 1 will be described with reference to FIG. 1 and FIG. 2. The third laminated glass 1 is the laminated glass 1 for a vehicle front window, including: a curved first glass plate 21 having a trapezoidal or rectangular shape; a second glass plate 22 having the same shape as the first glass plate; and an intermediate film 3 disposed between the first glass plate 21 and the second glass plate 22,
the laminated glass 1 being provided with an imaging section 52 of an image projected from an imaging device 51 incorporated in a dash board 4 on a driver's seat side in an indoor side surface of the laminated glass 1, in a state in which the laminated glass 1 is incorporated in a vehicle body 100,
the laminated glass 1 being provided with a wedge angle profile with a thickness continuously changing in all 360° directions in observation from the inside of the vehicle when an upper longitudinal direction from the imaging section 52 is set to 0°, and having a thickness of the laminated glass based on the wedge angle profile continuously decreasing from an upper side to a lower side and continuously decreasing in the horizontal direction from a driver's seat side to a passenger seat side.

At least one glass plate selected from the group consisting of the first glass plate 21 and the second glass plate 22 is a wedge glass plate provided with a wedge angle profile with a thickness continuously decreasing from an upper side 1U to a lower side 1B, and
the intermediate film 3 has a wedge angle profile with a thickness continuously decreasing in the direction from a lateral side 1D on a driver's seat side to a lateral side 1A on a passenger seat side.

In the wedge glass plate, the constant thickness profile direction is the direction D3, and in the intermediate film 3, the constant thickness profile direction is the direction D1. The wedge glass plate and the intermediate film 3 are laminated such that the direction D1 is different from the direction D3. The direction D1 makes an angle (acute angle) of 5° to 90°, preferably 15° to 75° with the direction D3. The third laminated glass 1 is different from the second laminated glass 1 in that the direction D1 and the direction D3 are switched.

The direction D1 of the intermediate film 3 may be set to be the same as the longitudinal direction from a lower side 1B to an upper side 1U, and the direction D3 of the wedge glass plate may be set to be the same as the horizontal direction from a lateral side 1D to a lateral side 1A. Instead of the structure in which the direction D1 is "set to be the same as the longitudinal direction" and the direction D3 is "set to be the same as the horizontal direction", the direction D3 may be set at any one of angles within the range of 60° to 87° when the upper longitudinal direction from the imaging section 52 is set to 0°. The direction D1 is set such that it makes an angle of 5° to 90°, preferably 15° to 75° with the direction D3.

The third laminated glass 1 preferably has a wedge angle in the 180° direction of 0.1 mrad to 1.4 mrad in observation from the inside of the vehicle when the upper longitudinal direction from the imaging section is set to 0°. In a case in which the angle is less than 0.1 mrad, an effect of double image suppression in the longitudinal direction of the laminated glass 1 is likely to be reduced. On the other hand, in a case in which the angle exceeds 1.4 mrad, difference in the thickness of the laminated glass between the upper side 1U and the lower side 1B occurs, and therefore efficiency when the laminated glass 1 is assembled to the vehicle body is likely to be lowered. Considering these, the wedge angle may be 0.3 mrad to 1.2 mrad. In the laminated glass 1, the thickness of the intermediate film 3 in an area of a maximum thickness may be 0.8 mm to 2.2 mm.

The laminated glass 1 preferably has a wedge angle in the horizontal direction from the driver's seat side to the passenger seat side of 0.1 mrad to 0.6 mrad. In a case in which the angle is less than 0.1 mrad, an effect of double image suppression in the longitudinal direction of the laminated glass 1 is likely to be reduced. On the other hand, in a case in which the angle is more than 0.6 mrad, an effect of double image suppression is too large, which may lead to difficulty in displaying a reflected image on an indoor side and a reflected image on an outdoor side while they are overlapped. Considering these, the wedge angle may be 0.2 mrad to 0.5 mrad.

A method for manufacturing each of the second laminated glass 1 and the third laminated glass 1 includes
a step A of preparing a curved first glass plate 21 having a trapezoidal or rectangular shape, and a second glass plate 22 having the same shape as the first glass plate;
a step B1 of preparing a first intermediate film original sheet 3M1 that is a long intermediate film original sheet 3M1, that has a wedge angle profile with a thickness continuously decreasing in a direction from one lateral side to an opposite lateral side, that has both principal surfaces nonparallel to each other, and that has a constant thickness profile in one direction;
a step G of preparing an intermediate film 3 having a trapezoidal or rectangular shape cut out from the first intermediate film original sheet 3M1; and
a step D of interposing the intermediate film 3 between the first glass plate 21 and the second glass plate 22,
at least one glass plate selected from the group consisting of the first glass plate 21 and the second glass plate 22 being provided with a wedge angle profile with a thickness continuously decreasing in the direction from one lateral side to an opposite lateral side, having both principal surfaces nonparallel to each other, and having a constant thickness profile in one direction,
the constant thickness profile direction of the first intermediate film original sheet being different from the constant thickness profile direction of the glass plate having the wedge angle profile.

Another preferred method for manufacturing each of the second laminated glass 1 and the third laminated glass 1 includes
a step A of preparing a curved first glass plate 21 having a trapezoidal or rectangular shape, and a second glass plate 22 having the same shape as the first glass plate 21;
a step B1 of preparing a first intermediate film original sheet 3M1 that is a long intermediate film original sheet 3M1, that has a wedge angle profile with a thickness continuously decreasing in a direction from one lateral side to an opposite lateral side, that has both principal surfaces nonparallel to each other, and that has a constant thickness profile in one direction;
a step H of interposing the first intermediate film original sheet 3M1 between the first glass plate 21 and the second glass plate 22; and
a step I of cutting the first intermediate film original sheet laminated body 3M1 between the first glass plate 21 and the second glass plate 22 to include an intermediate film having a trapezoidal or rectangular shape between the plates,
at least one glass plate selected from the group consisting of the first glass plate and the second glass plate being provided with a wedge angle profile with a thickness continuously decreasing in the direction from one lateral side to an opposite lateral side, having both principal surfaces nonparallel to each other, and having a constant thickness profile in one direction,
the constant thickness profile direction of the first intermediate film original sheet being different from the constant thickness profile direction of the glass plate having the wedge angle profile.

After the step C, the first glass plate 21, the second glass plate 22, and the intermediate film 3 are thermocompression bonded, specifically, a laminated body of the first glass plate 21, the intermediate film 3, and the second glass plate 22 is pressurized at 1.0 MPa to 1.5 MPa at 100°C to 150°C for 15 minutes to 60 minutes, for example. Thereby, the laminated glass 1 can be manufactured. Before thermocompression bonding, a space between the intermediate film 3 and each of the glass plates 21 and 22 may be deaerated.

### REFERENCE SIGNS LIST

1 laminated glass
1U upper side of laminated glass
1B lower side of laminated glass
1D lateral side on driver's seat side of laminated glass
1A lateral side on passenger seat side of laminated glass
21 first glass plate
22 second glass plate
2R glass basis material
3 intermediate film
3M1 first intermediate film original sheet
3M2 second intermediate film original sheet
3ML intermediate film original sheet laminated body
4 dash board
51 imaging device for projecting image on display member (laminated glass)
52 imaging section of image projected on display member (laminated glass)
53 virtual image visually recognized by observer (driver)
6 molten metal
7 roll
100 vehicle body
200 observer (driver)

## Claims

1. Laminated glass for a vehicle front window, comprising:
a curved first glass plate having a trapezoidal or rectangular shape;
a second glass plate having the same shape as the first glass plate; and
an intermediate film disposed between the first glass plate and the second glass plate,
the laminated glass being provided with an imaging section of an image projected from an imaging device incorporated in a dash board on a driver's seat side in an indoor side surface of the laminated glass, in a state in which the laminated glass is incorporated in a vehicle body,
the laminated glass being provided with a wedge angle profile with a thickness continuously changing in all 360° directions in observation from the inside of the vehicle when an upper longitudinal direction from the imaging section is set to 0°, and having a thickness of the laminated glass based on the wedge angle profile continuously decreasing from an upper side to a lower side and continuously decreasing in the horizontal direction from a driver's seat side to a passenger seat side.

2. The laminated glass according to claim 1,
wherein the intermediate film is provided with a wedge angle profile with a thickness continuously changing in all 360° directions in observation from the inside of the vehicle when the upper longitudinal direction from the imaging section is set to 0°, and has a thickness of the intermediate film based on the wedge angle profile continuously decreasing from an upper side to a lower side and continuously decreasing in the horizontal direction from the driver's seat side to the passenger seat side.

3. The laminated glass according to claim 1 or 2,
wherein the intermediate film has a wedge angle in the 180° direction of 0.1 mrad to 1.4 mrad in observation from the inside of the vehicle when the upper longitudinal direction from the imaging section is set to 0°.

4. The laminated glass according to any one of claims 1 to 3,
wherein the intermediate film has a wedge angle in the horizontal direction from the driver's seat side to the passenger seat side of 0.1 mrad to 0.6 mrad.

5. The laminated glass according to claim 1,
wherein at least one glass plate selected from the group consisting of the first glass plate and the second glass plate is provided with a wedge angle profile with a thickness continuously decreasing in the direction from a lateral side on a driver's seat side to a lateral side on a passenger seat side, and
the intermediate film has a wedge angle profile with a thickness continuously decreasing from an upper side to a lower side.

6. The laminated glass according to claim 1,
wherein at least one glass plate selected from the group consisting of the first glass plate and the second glass plate is provided with a wedge angle profile with a thickness continuously decreasing from an upper side to a lower side, and
the intermediate film has a wedge angle profile with a thickness continuously decreasing in the direction from a lateral side on a driver's seat side to a lateral side on a passenger seat side.

7. The laminated glass according to claim 5 or 6,
wherein the laminated glass has a wedge angle in the 180° direction of 0.1 mrad to 1.4 mrad in observation from the inside of the vehicle when the upper longitudinal direction from the imaging section is set to 0°.

8. The laminated glass according to any one of claims 5 to 7,
wherein the laminated glass has a wedge angle in the horizontal direction from the driver's seat side to the passenger seat side of 0.1 mrad to 0.6 mrad.

9. The laminated glass according to any one of claims 5 to 8,
wherein the glass plate having the wedge angle profile is provided with a constant thickness profile direction,
the intermediate film having the wedge angle profile is provided with a constant thickness profile direction,
the constant thickness profile direction of the glass plate having the wedge angle profile is the same as the longitudinal direction from a lower side to an upper side of the laminated glass.

10. The laminated glass according to claim 9,
wherein the constant thickness profile direction of the glass plate having the wedge angle profile makes an angle of 5° to 90° with the constant thickness profile direction of the intermediate film having the wedge angle profile.

11. A method for manufacturing the laminated glass according to any one of claims 1 to 4, the method comprising:
a step A of preparing a curved first glass plate having a trapezoidal or rectangular shape, and a second glass plate having the same shape as the first glass plate;
a step B1 of preparing a first intermediate film original sheet that is a long intermediate film original sheet, that has a wedge angle profile with a thickness continuously decreasing in a direction from one lateral side to an opposite lateral side, that has both principal surfaces nonparallel to each other, and that has a constant thickness profile in one direction;
a step B2 of preparing a second intermediate film original sheet that is a long intermediate film original sheet, that has a wedge angle profile with a thickness continuously decreasing in a direction from one lateral side to an opposite lateral side, that has both principal surfaces nonparallel to each other, and that has a constant thickness profile in one direction;
a step B3 of forming an intermediate film original sheet laminated body such that the constant thickness profile direction of the first intermediate film original sheet is not the same as the constant thickness profile direction of the second intermediate film original sheet;
a step C of preparing an intermediate film having a trapezoidal or rectangular shape that is cut out from the intermediate film original sheet laminated body; and
a step D of interposing the intermediate film between the first glass plate and the second glass plate.

12. A method for manufacturing the laminated glass according to any one of claims 1 to 4, the method comprising:
a step A of preparing a curved first glass plate having a trapezoidal or rectangular shape, and a second glass plate having the same shape as the first glass plate;
a step B1 of preparing a first intermediate film original sheet that is a long intermediate film original sheet, that has a wedge angle profile with a thickness continuously decreasing in a direction from one lateral side to an opposite lateral side, that has both principal surfaces nonparallel to each other, and that has a constant thickness profile in one direction;
a step B2 of preparing a second intermediate film original sheet that is a long intermediate film original sheet, that has a wedge angle profile with a thickness continuously decreasing in a direction from one lateral side to an opposite lateral side, that has both principal surfaces nonparallel to each other, and that has a constant thickness profile in one direction;
a step B3 of forming an intermediate film original sheet laminated body such that the constant thickness profile direction of the first intermediate film original sheet is not the same as the constant thickness profile direction of the second intermediate film original sheet;
a step E of interposing the intermediate film original sheet laminated body between the first glass plate and the second glass plate; and
a step F of cutting the intermediate film original sheet laminated body between the first glass plate and the second glass plate to include an intermediate film having a trapezoidal or rectangular shape between the plates.

13. A method for manufacturing the laminated glass according to any one of claims 1 and 5 to 10, the method comprising:
a step A of preparing a curved first glass plate having a trapezoidal or rectangular shape, and a second glass plate having the same shape as the first glass plate;
a step B1 of preparing a first intermediate film original sheet that is a long intermediate film original sheet, that has a wedge angle profile with a thickness continuously decreasing in a direction from one lateral side to an opposite lateral side, that has both principal surfaces nonparallel to each other, and that has a constant thickness profile in one direction;
a step G of preparing an intermediate film having a trapezoidal or rectangular shape cut out from the first intermediate film original sheet; and
a step D of interposing the intermediate film between the first glass plate and the second glass plate,
at least one glass plate selected from the group consisting of the first glass plate and the second glass plate being provided with a wedge angle profile with a thickness continuously decreasing in the direction from one lateral side to an opposite lateral side, having both principal surfaces nonparallel to each other, and having a constant thickness profile in one direction,
the constant thickness profile direction of the first intermediate film original sheet being different from the constant thickness profile direction of the glass plate having the wedge angle profile.

14. A method for manufacturing the laminated glass according to any one of claims 1 and 5 to 10, the method comprising:
a step A of preparing a curved first glass plate having a trapezoidal or rectangular shape, and a second glass plate having the same shape as the first glass plate;
a step B1 of preparing a first intermediate film original sheet that is a long intermediate film original sheet, that has a wedge angle profile with a thickness continuously decreasing in a direction from one lateral side to an opposite lateral side, that has both principal surfaces nonparallel to each other, and that has a constant thickness profile in one direction;
a step H of interposing the first intermediate film original sheet between the first glass plate and the second glass plate; and
a step I of cutting the first intermediate film original sheet laminated body between the first glass plate and the second glass plate to include an intermediate film having a trapezoidal or rectangular shape between the plates,
at least one glass plate selected from the group consisting of the first glass plate and the second glass plate being provided with a wedge angle profile with a thickness continuously decreasing in the direction from one lateral side to an opposite lateral side, having both principal surfaces nonparallel to each other, and having a constant thickness profile in one direction,
the constant thickness profile direction of the first intermediate film original sheet being different from the constant thickness profile direction of the glass plate having the wedge angle profile.

15. The method for manufacturing the laminated glass according to claim 13 or 14,
wherein the constant thickness profile direction of the glass plate having the wedge angle profile makes an angle of 5° to 90° with the constant thickness profile direction of the intermediate film original sheet having the wedge angle profile.

16. The method for manufacturing the laminated glass according to any one of claims 13 to 15,
wherein the constant thickness profile direction of the glass plate having the wedge angle profile is the same as the longitudinal direction from a lower side to an upper side of the laminated glass.
